# FASCICULE DE BREVET EUROPEEN

(11) **EP 4 264 380 B1**
(45) Date de publication et mention de la délivrance du brevet: **27.11.2024**
(21) Numéro de dépôt: 21801852.1
(22) Date de dépôt: 22.10.2021
(51) Int. Cl.: G04D 3/04, G04B 31/06, G01B 5/06

(54) **DISPOSITIF DE MESURE SIMULTANÉE DE FORCE ET DISTANCE NOTAMMENT POUR GARNISSAGE DE COMPOSANT D'HORLOGERIE**
GERÄT ZUR GLEICHZEITIGEN MESSUNG VON KRAFT UND WEG, INSBESONDERE FÜR DIE LAGERUNG VON UHRWERKSKOMPONENTEN
DEVICE FOR SIMULTANEOUS MEASUREMENT OF FORCE AND DISTANCE, IN PARTICULAR FOR SETTING A TIMEPIECE COMPONENT

(30) Priorité: 21.12.2020 EP 20216203
(43) Date de publication de la demande: 25.10.2023
(73) Titulaire: ETA SA Manufacture Horlogère Suisse, 2540 Grenchen (CH)
(72) Inventeur: GANGUIN, Fabrice, 2740 Moutier (CH); WELZ, Erich, 2830 Courrendlin (CH)
(74) Mandataire: ICB SA
(86) Numéro de dépôt international: PCT/EP2021/079385
(87) Numéro de publication internationale: WO 2022/135768

(56) Documents cités:
- INERIS: "Détecteur de pression", 1 April 2005 (2005-04-01), pages 1 - 11, XP055809107, Retrieved from the Internet <URL:https://www.ineris.fr/sites/ineris.fr/files/contribution/Documents/pulverulent_capteur_pression_V1.pdf> [retrieved on 20210531]
- "Empierrage de haute precision", BULLETIN DE LA SOCIETE SUISSE DE CHRONOMETRIE, SSC, NEUCHATEL, CH, no. 60, 1 May 2009 (2009-05-01), pages 31 - 33, XP001551355
- BOURGEOIS FABIEN: "Vers la maîtrise de la qualité des assemblages de précision", 15 June 2007 (2007-06-15), pages 195 - 214, XP055808813, Retrieved from the Internet <URL:https://infoscience.epfl.ch/record/104116/files/EPFL_TH3825.pdf> [retrieved on 20210528], DOI: 10.5075/epfl-thesis-3825

## Description

### Domaine technique de l'invention

L'invention concerne un dispositif d'application d'une force axiale sur un composant d'horlogerie, et de mesure simultanée de distance axiale entre une référence et une surface dudit composant, notamment pour garnissage de pièce d'horlogerie, ledit dispositif comportant un support porteur d'au moins un corps de mesure lequel comporte au moins un moyen de mesure agencé pour effectuer une mesure axiale de position d'une dite surface d'un composant d'horlogerie, selon une direction axiale, lequel moyen de mesure comporte un palpeur en contact avec une touche d'appui et de mesure et aligné avec elle selon ladite direction axiale.

L'invention concerne encore un procédé d'utilisation d'un tel dispositif de mesure.

L'invention concerne le domaine de la production horlogère, et en particulier de l'assemblage et de la métrologie en atelier.

### Arrière-plan technologique

Dans le cadre de l'étape de garnissage de pierres dans des composants d'horlogerie, la tenue de celles-ci (déplacement maximal de l'ordre de 2 micromètres) doit être garantie pour une force donnée, pour assurer l'interchangeabilité des ébauches d'une même famille.

Pour déterminer cela, il est commun d'utiliser successivement un capteur de distance, basé sur l'utilisation d'un palpeur en appui sur la surface d'une pierre, et un émetteur de force exerçant un effort axial taré sur cette pierre, cet émetteur de force étant muni d'un capteur de force, avant de réutiliser le capteur de distance pour vérifier que l'enfoncement maximal de cette pierre dans son composant d'horlogerie est conforme aux tolérances.

Une autre possibilité pour évaluer la tenue des pierres est d'utiliser des appareils de mesure force-distance motorisés. Cette alternative trouve principalement sa place en laboratoire et pour certains cas en production. Mais cette solution est plus complexe à mettre en oeuvre, est moins rapide pour mesurer plusieurs positions et son coût est plus élevé.

L'article "Empierrage de haute précision", publié dans le Bulletin de la Société Suisse de Chronométrie, no. 60, mai 2009, pages 31-33, divulgue une machine permettant de chasser des pièces mécaniques et comprenant un tasseau presse-pierre et un tasseau presse-flanc configurés pour chasser une pierre dans une platine. Cette machine comprend également un palpeur de pierre et un palpeur de platine configurés pour mesurer la position relative entre pierre et support avant d'utiliser le presse-flanc pour appliquer une précontrainte localisée du support. Cette machine combine ainsi l'application d'une force et la mesure du déplacement de la surface sur laquelle est appliquée cette force.

### Résumé de l'invention

Pour éviter une méthode de mesure laborieuse avec l'une ou l'autre des solutions mentionnées ci-dessus, l'invention se propose de combiner par un principe simple les deux éléments de mesure (force et distance) dans un même ensemble, afin d'éviter de multiples manipulations d'un composant d'horlogerie.

La détermination de la tenue des pierres s'avère alors moins complexe et moins coûteuse.

À cet effet, l'invention concerne un dispositif de mesure simultanée de force et distance pour garnissage de pièce d'horlogerie, selon la revendication 1.

Un autre aspect de l'invention concerne un procédé d'utilisation d'un tel dispositif de mesure, selon la revendication 21.

### Brève description des figures

D'autres caractéristiques et avantages de l'invention apparaîtront à la lecture de la description détaillée qui va suivre, en référence aux dessins annexés, où :

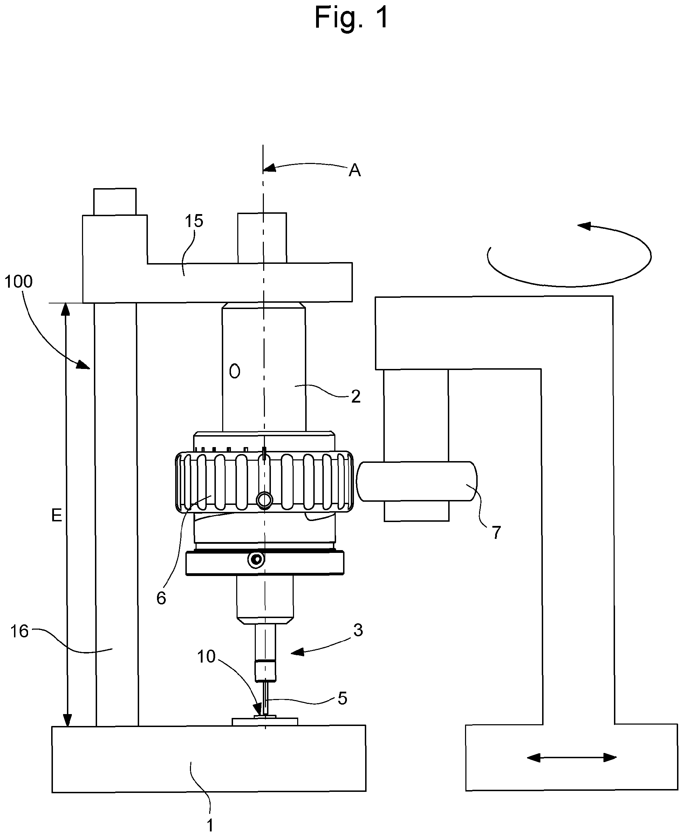

- la figure 1 représente, de façon schématisée et en élévation, un dispositif selon l'invention, comportant un bâti rigide avec une table de réception d'un composant d'horlogerie, une colonne et un support porteur d'un corps de mesure qui intègre un palpeur de mesure de distance, et qui comporte un moyen de commande, ici constitué par une bague cannelée, qui est agencé pour être manoeuvré par un utilisateur ou comme ici par un galet d'entraînement que comporte un manipulateur automatisé, pour appliquer sur une surface du composant un effort axial caractérisé, transmis à une touche d'appui et de mesure par un moyen de rappel élastique qui obéit à une caractéristique reproductible effort/course, et auquel le moyen de commande impose une certaine course pour l'obtention d'un effort axial de module prédéterminé ;
- la figure 2 représente, de façon schématisée, partielle, et en coupe axiale, une première variante d'un tel dispositif, où l'on voit que le moyen de commande constitué par la bague externe entraîne une bague interne qui déforme un empilement d'éléments élastiques, qui constitue ce moyen de rappel élastique d'application de la force axiale ;
- la figure 3 représente, de façon schématisée et en plan, un tel élément élastique, circulaire et comportant des bras en spirale ;

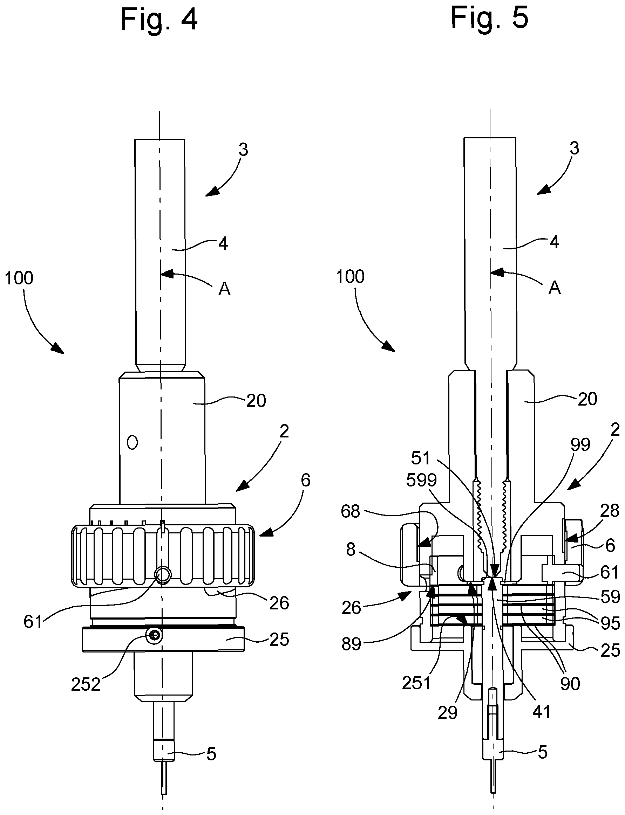

- la figure 4 représente, de façon schématisée et en élévation, le corps de mesure d'une autre variante d'un tel dispositif, où la bague externe comporte des entraîneurs chacun mobile dans une rainure hélicoïdale du corps ;
- la figure 5 représente, de façon schématisée et en coupe, le corps de mesure de la figure 4, dans une position de repos où l'empilement d'éléments élastiques est en appui sur une surface de butée d'un corps supérieur ;

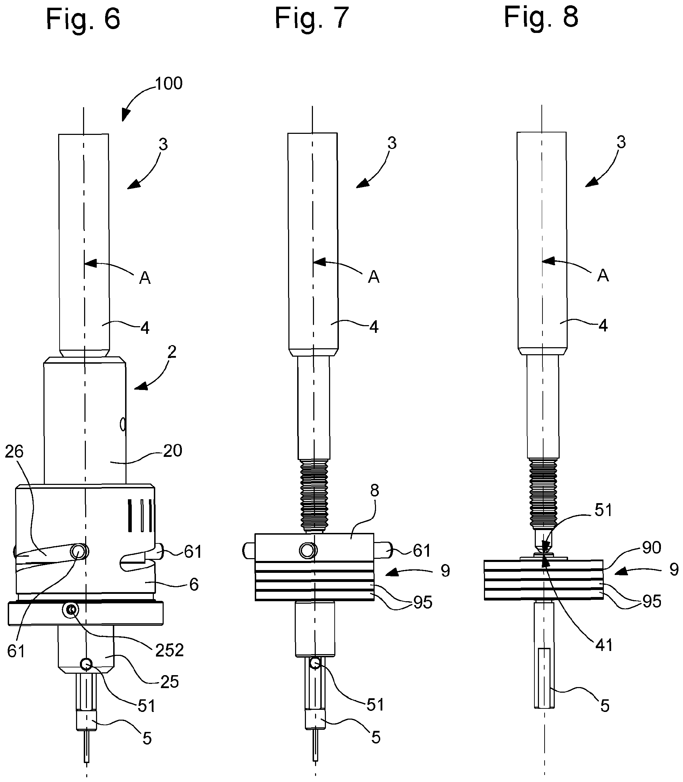

- la figure 6 représente, de façon similaire à la figure 4, le même corps de mesure sans la bague externe ;
- la figure 7 représente, de façon similaire à la figure 6, le même corps de mesure sans son corps supérieur ; on voit de haut en bas le palpeur, la bague d'appui mue par le moyen de commande, l'empilement des éléments élastiques, et la touche d'appui et de mesure ;
- la figure 8 représente, de façon similaire à la figure 7, le même corps de mesure sans la bague d'appui ;

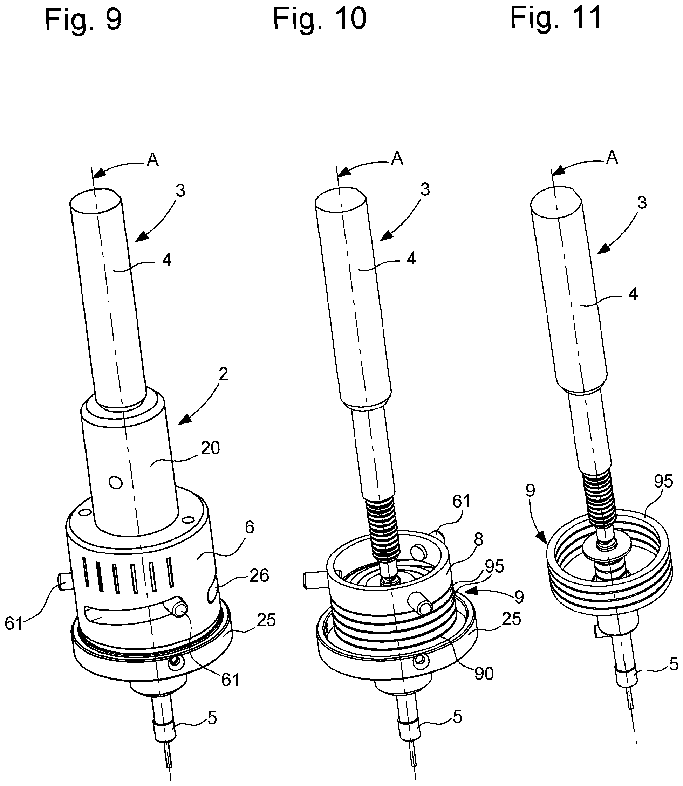

- la figure 9 représente, de façon schématisée et en perspective l'ensemble de la figure 6 ;
- la figure 10 représente, de façon schématisée et en perspective l'ensemble de la figure 7, montrant un empilement alterné de tels éléments élastiques et de bagues intermédiaires ;
- la figure 11 représente, de façon schématisée et en perspective l'ensemble de la figure 8, la bague élastique supérieure n'étant pas représentée, on ne voit que la bague intermédiaire supérieure ;
- la figure 12 est un exemple d'une courbe caractéristique effort/course d'un élément élastique ou d'un empilage d'éléments élastiques : des valeurs connues de course déterminent exactement des valeurs prédéterminées d'effort axial ;
- la figure 13 représente, de façon schématisée et en vue de dessus un poste de production comportant trois dispositifs selon l'invention, avec des supports réglables en hauteur par manivelle ou par moteur, et desservant des palettes circulaires portant les composants d'horlogerie et permutables par un palettiseur ; l'un des dispositifs comporte un galet d'entraînement comme celui de la figure 1 ;
- la figure 14 représente, de façon schématisée et en coupe, un corps de mesure comportant deux étages en série, avec un étage supérieur pour l'application d'un effort plus important que celui appliqué, pour un réglage fin, par l'étage inférieur ;
- la figure 15 représente, de façon schématisée et en coupe, une table du dispositif, qui comporte un capteur de force disposé sous le composant pour la mesure digitale de l'effort axial qui lui est appliqué ;
- la figure 16 représente, de façon similaire à la figure 15, une palette porte-pièce, qui comporte un tel capteur de force.

### Description détaillée de l'invention

L'invention concerne un dispositif 100 d'application d'une force axiale sur un composant d'horlogerie, et de mesure simultanée de distance axiale entre une référence et une surface 10 de ce composant.

L'invention, développée pour maîtriser le garnissage de pièce d'horlogerie, est utilisable pour toute opération de précision nécessitant l'application d'un effort sur un composant, et la vérification du maintien ou de la dérive de la position axiale de ce composant pendant ou après l'application de cet effort. Elle est, de ce fait, intéressante pour nombre d'applications de mécanique de précision, notamment horlogères.

Ce dispositif 100 comporte un support 1, le plus rigide possible, porteur d'au moins un corps de mesure 2. Ce corps de mesure 2 comporte au moins un moyen de mesure 3, qui est agencé pour effectuer une mesure axiale de position d'une telle surface 10 d'un composant d'horlogerie, selon une direction axiale A, par rapport à une surface de référence, comme une table que comporte le support 1, ou autre. Ce moyen de mesure 3 comporte un palpeur 4, en contact avec une touche d'appui et de mesure 5 ou à sa proximité en cas de liaison inductive ou similaire, et aligné avec elle selon cette direction axiale A.

Selon l'invention, le dispositif 100 est un dispositif combiné pour effectuer simultanément l'application d'une force et la mesure du déplacement de la surface sur laquelle est appliquée cette force. Le dispositif 100 comporte à cet effet au moins un moyen de commande 6, qui est agencé pour être manoeuvré par un utilisateur ou par un manipulateur automatisé 7, pour appliquer sur une surface 10 un effort axial caractérisé, transmis à ladite touche d'appui et de mesure 5 par au moins un moyen de rappel élastique axial 9 taré. Par « effort axial caractérisé » on entend que l'ensemble des moyens de rappel élastique 9 obéit à une caractéristique effort/course qui est reproductible : ainsi chaque course appliquée correspond toujours au même effort.

De façon avantageuse, la composition des moyens de rappel élastique 9 est modulaire, ce qui permet de faire appel à des plages particulières d'effort, qui conviennent aux applications prévues. Par exemple, pour le garnissage de composants d'horlogerie par chassage de pierres dans des alésages, on choisit des moyens de rappel élastique 9 couvrant une plage de 0 à 40 N, et plus particulièrement de 2 N à 40 N pour le chassage des pierres d'horlogerie dans la grande majorité des cas. Mais on peut tout aussi bien choisir de couvrir des plages limitées, par exemple de 15 à 25 N. Dans chaque cas, une course imposée au moyen de commande 6, qui peut être repérée par une échelle graduée, un crantage, ou autre, garantit à l'utilisateur l'application de la force qu'il lit face à cette course sur la courbe caractéristique.

Le moyen de commande 6 est plus particulièrement agencé pour entraîner une bague d'appui 8 dans un mouvement selon la direction axiale A, et pour modifier l'effort axial exercé par la bague d'appui 8, selon cette direction axiale A, sur cet au moins un moyen de rappel élastique axial 9, qui est agencé pour transmettre à la touche d'appui et de mesure 5 un effort axial proportionnel à la course axiale de la bague d'appui 8.

Dans la variante avantageuse illustrée par les figures, le moyen de commande 6 est agencé pour être entraîné en rotation, se présente par exemple sous la forme d'une bague cannelée, et comporte au moins un entraîneur 61, qui est agencé pour suivre une rainure 26 oblique ou sensiblement hélicoïdale ménagée dans le corps 2, et pour entraîner la bague d'appui 8 au moins en translation selon la direction axiale A. Cette bague d'appui 8 comporte, selon la direction axiale A, un filetage 82, ou respectivement un taraudage, coopérant avec un taraudage 22, ou respectivement un filetage, que comporte le corps 2. De la même façon, le moyen de commande 6 comporte un taraudage 68, ou respectivement un filetage, coopérant avec un filetage 28, ou respectivement un taraudage, que comporte le corps 2. Sur la variante non limitative illustrée par les figures, le moyen de commande 6 est une bague, qu'il suffit de faire tourner jusqu'à une position prédéterminée pour appliquer progressivement la force requise.

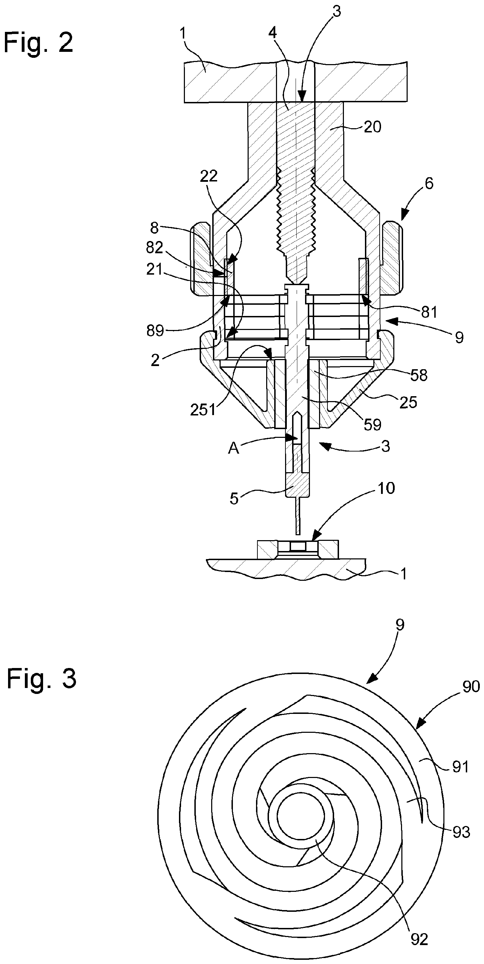

Selon une caractéristique avantageuse de l'invention, le moyen de rappel élastique axial 9 comporte au moins un élément élastique 90, notamment sensiblement plan, comportant une serge périphérique 91 portant au moins un bras en spirale 93 portant un anneau central 92, tel que visible sur la figure 3. Plus particulièrement cet élément élastique 90 est réalisé en acier à ressort de type XC80 ou similaire. La réalisation de tels éléments élastiques 90 de même géométrie en plan permet de les rendre interchangeables. Le choix de différentes épaisseurs permet de leur donner des caractéristiques d'effort différentes. Par exemple, pour une même géométrie plane, un élément d'épaisseur 0.1 mm peut correspondre à un effort de 5 N, celui de 0.2 mm à un effort de 7.5 N, celui de 0.3mm à un effort de 12.5 N, celui de 0.4 mm à un effort de 15 N, celui de 0.5 mm à un effort de 17.5 N, et celui de 0.6 mm à un effort de 20 N, ou similaire. Chaque élément élastique 90 est caractérisé par une courbe caractéristique effort/course axiale appliquée, et il est facile de déterminer la courbe caractéristique d'un empilage de tels éléments élastiques 90 de comportement similaire. Par exemple, les figures illustrent l'obtention d'un effort axial maximal de 40 N avec l'emploi de trois éléments élastiques 90 d'épaisseur 0.5 mm, et d'un élément élastique 90 d'épaisseur 0.2 mm, avec la même géométrie en projection, ce qui facilite leur fabrication à bas coût de production. Par ailleurs, la combinaison de différentes épaisseurs permet de leur donner des caractéristiques d'effort également différentes. Par exemple, pour un ensemble d'éléments élastiques constitué de 3 éléments d'épaisseurs de 0.5 mm et 1 élément d'épaisseur de 0.2 mm, un déplacement axial de 1 mm de cet ensemble peut correspondre à un effort de 12 N, celui de 1.5 mm à un effort de 19 N, celui de 2 mm à un effort de 26 N, celui de 2.5 mm à un effort de 33 N, et celui de 3 mm à un effort de 40 N, ou similaire.

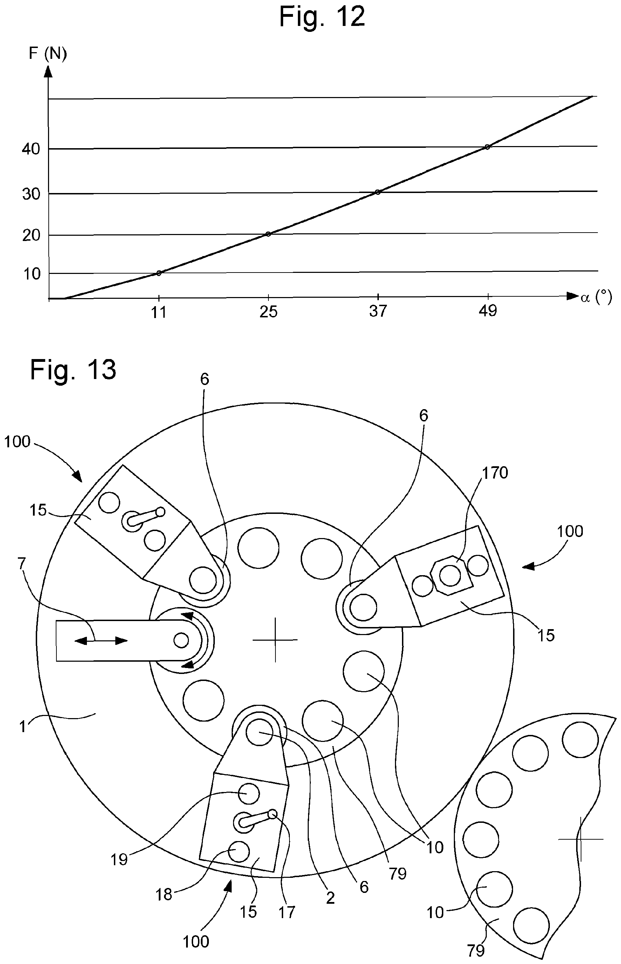

La figure 12 illustre un exemple de courbe caractéristique pour un moyen de rappel élastique 9 taré à 40 N, on voit que cette courbe est presque linéaire. Cette courbe est ici exagérément déformée, car la caractéristique d'un élément élastique 90 selon la figure 3 se révèle presque linéaire dans son domaine d'utilisation. Mais on comprend bien que, même si la courbe caractéristique n'est pas linéaire, ce qui est important est sa reproductibilité, quand il s'agit de définir des valeurs discrètes de course axiale garantissant des valeurs d'effort connues. Et des courses particulières, repérées par un marquage, un crantage, ou autre, correspondent à des valeurs d'effort bien définies, comme dans cet exemple angle 11°/force 10 N, angle 25°/force 20 N, angle 37°/force 30 N, angle 49°/force 40N. Naturellement un tel élément élastique 90 n'est pas nécessairement plan, comme dans le cas des rondelles Belleville ou Schnorr de géométrie conique, mais il faut bien voir que les efforts appliqués sont ici très faibles, et une géométrie plane est beaucoup plus avantageuse, car elle garantit la reproductibilité de fabrication beaucoup mieux qu'une rondelle élastique gauche ou conique. Et les déviations par rapport à la position de repos plane sont également très faibles, de l'ordre du dixième de millimètre ou du millimètre pour des éléments élastiques 90 de diamètre extérieur 30 mm et de diamètre intérieur 5 mm tels qu'utilisés dans le dispositif non limitatif illustré par les figures.

Ainsi, plus particulièrement, le moyen de rappel élastique axial 9 comporte un empilement de plusieurs tels éléments élastiques 90, chacun taré pour un effort axial nominal particulier, et dont la résultante détermine le tarage axial maximal du dispositif 100.

De façon avantageuse, cet empilement est un empilement alterné de tels éléments élastiques 90 et de bagues intermédiaires 95, qui sont agencées pour éviter tout contact entre les bras 93 des éléments élastiques 90 voisins. De façon particulière et non limitative, cet empilement comporte encore, en partie supérieure, un circlips 99 coopérant avec une gorge 599 de l'arbre central 59, et qui maintient l'ensemble constitué par les éléments élastiques 90 alternés avec les bagues intermédiaires 95 (ces derniers notamment en laiton) ; vers le bas un autre circlips peut être logé dans une autre rainure pour servir simplement de limiteur de course et surtout faciliter l'assemblage, sans exercer de contrainte sur l'ensemble des éléments élastiques 90 et des bagues intermédiaires 95, car du côté inférieur cet ensemble doit être libre pour pouvoir appliquer la force d'appui.

Dans une composition telle qu'illustrée par les figures, le dispositif 100 comporte une pluralité de tels éléments élastiques 90, qui sont tous interchangeables, et chacun associé à une courbe caractéristique d'effort en fonction de la course, accessible à l'utilisateur et/ou stockée dans un moyen de pilotage apte à déterminer une composition d'empilement en fonction de l'effort résultant à appliquer, et les courses de rotation ou axiales à appliquer au moyen de commande 6 pour l'obtention d'un effort axial donné. L'utilisateur est, ainsi, certain de l'effort réellement appliqué sur la surface 10.

Différents montages sont possibles. Dans une variante, le moyen de rappel élastique axial 9 comporte au moins un élément élastique 90 déformable axialement entre une première partie rigide en appui de butée sur au moins une surface d'appui de butée 21, 251, que comporte le corps 2, et une deuxième partie rigide qui est soumise à l'action de poussée exercée par au moins une surface de poussée 81, 89, que comporte la bague d'appui 8. Dans une autre variante, le moyen de rappel élastique axial 9 comporte au moins un élément élastique 90 déformable axialement entre une première partie rigide en appui de butée sur au moins une surface d'appui de butée 21, 251, que comporte ledit corps 2, et une deuxième partie rigide solidaire de la bague d'appui 8.

Pour faciliter la maintenance et l'échange des éléments élastiques, le corps 2 est avantageusement en au moins deux parties assemblées l'une avec l'autre, une partie supérieure 20 agencée pour coopérer avec le moyen de commande 6 et renfermant le palpeur 4, et une partie inférieure 25 portant la touche d'appui et de mesure 5. Des moyens de goupillage 252, 51, permettent un démontage aisé des différents constituants.

Le palpeur 4 coopère avec un poinçon rigide 59, logé dans un palier ou un roulement 58, et qui appuie sur l'insert à tester au niveau de la surface 10, par l'intermédiaire de la touche d'appui et de mesure 5, qui est de préférence interchangeable. Lors de l'application d'une force, le déplacement de la surface 10 est immédiatement mesuré. Le palpeur est réglé sans jeu sur la surface 10 à tester, il suffit alors de régler le zéro de l'affichage ; ensuite on applique une force prédéfinie et tournant le moyen de commande 6 selon une graduation, qui n'est pas nécessairement régulière, et qui découle de la caractéristique effort/course des éléments élastiques 90 qui constituent le moyen de rappel élastique 9 du dispositif 100 dans sa composition du moment.

Plus particulièrement, au moins un moyen de commande 6 comporte un crantage et/ou des butées de limitation de course.

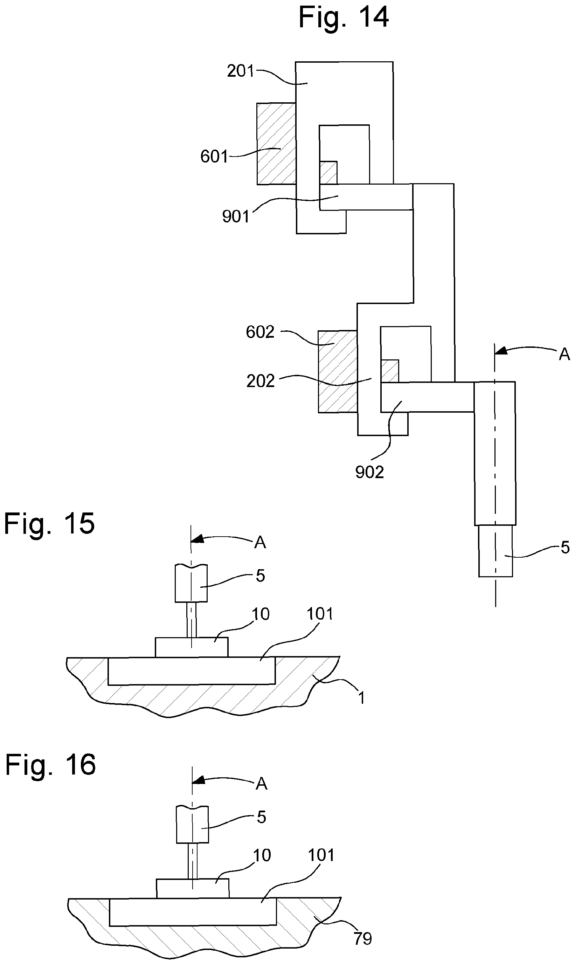

Dans une exécution particulière, schématisée sommairement par la figure 14, le dispositif 100 comporte un étagement en série de moyens de commande 6 distincts : 601 supérieur coopérant avec un corps supérieur 201 et un moyen de rappel élastique supérieur 901, et 602 inférieur coopérant avec un corps inférieur 202 et un moyen de rappel élastique inférieur 902, chacun correspondant à une plage particulière d'effort appliqué, pour appliquer sur une surface 10 un premier effort axial dans une première plage d'efforts, puis au moins une deuxième effort axial inférieur au premier effort axial dans une deuxième plage d'efforts inférieure à la première plage d'efforts.

Plus particulièrement, le dispositif 100 comporte, notamment au niveau du corps supérieur 20, une butée supérieure 29 pour une remise à zéro de la course, par mise en position de repos, non déformée, des éléments élastiques 90. Plus particulièrement encore, cette butée supérieure 29 comporte au moins un joint d'étanchéité et de protection, de type O-ring ou similaire.

Dans les variantes des figures 15 et 16, le support 1 du dispositif 100 comporte au moins une table ou une palette 79 de réception d'au moins un composant, laquelle table ou palette 79 comporte un capteur de force 101 disposé sous le composant pour la mesure digitale de l'effort axial qui lui est appliqué.

L'invention concerne le domaine de la précision horlogère, il s'agit donc de pouvoir mesurer des déviations très faibles, de l'ordre du micromètre. À cet effet, le dispositif 100 doit être le plus rigide possible, tout en restant de faibles dimensions externes, et d'une masse autorisant son déplacement manuel d'un poste de travail à un autre.

Le dispositif 100 comporte au moins une colonne de guidage 16 unique fortement dimensionnée comme sur la figure 1, ou encore comme sur la figure 13 une pluralité de colonnes 18, 19, pour le guidage d'éléments de support 15 portant des corps de mesure 2, et il comporte avantageusement des moyens de réglage manuels 17 et/ou des moyens de réglage motorisés 170 pour les macro-réglages d'approche du dispositif 100 lors d'un changement de production, ou encore un levier-came pour modifier rapidement la hauteur d'un support 15. Cette colonne 16, ou ces colonnes 18, 19, assure ou assurent la rigidité du dispositif 100 et la constance de l'écart axial E entre chaque élément de support 15 et une table de réception de composants à manipuler, pendant une campagne d'application de force et de mesure combinée. Quand le dispositif 100 est multiposte comme sur la figure 13, l'un des postes peut être consacré au déchassage.

Dans le cas d'une production de série, le dispositif 100 comporte avantageusement au moins une palette 79 de réception des composants, et qui est agencée pour une manutention robotisée, par un robot, un palettiseur rotatif ou linéaire, ou autre.

Pour une utilisation sans opérateur, ou si un même opérateur gère simultanément plusieurs dispositifs 100 de ce type, au moins un dispositif 100 comporte au moins un manipulateur automatisé 7, comportant un galet ou une courroie ou une roue d'entraînement, ou similaire, pour commander une course angulaire de rotation d'au moins un moyen de commande 6. Ce manipulateur automatisé 7 peut être couplé avec un moyen de vision pour cesser son mouvement d'entraînement lors de la synchronisation de repères que comportent le moyen de commande 6 et le corps 2.

L'invention concerne encore un procédé d'utilisation d'un tel dispositif 100, où l'on met à profit la reproductibilité des déformations des éléments élastiques 90, pour effectuer des opérations d'application d'effort qui sont bonnes du premier coup, et qui ne nécessitent pas de mesure ultérieur de vérification, puisque le dispositif 100 assure la mesure de déplacement d'une surface 10 en même temps qu'un effort axial lui est appliqué. Selon l'invention, on se munit d'une pluralité de tels éléments élastiques 90 tarés, dont on enregistre les caractéristiques d'effort en fonction de la course axiale appliquée, et on caractérise un empilage particulier de tels éléments élastiques 90 par sa caractéristique résultante combinée d'effort en fonction de la course axiale appliquée. Et on se réfère à cette caractéristique combinée pour imprimer au moyen de commande 6, en une seule opération de manoeuvre, la course de rotation ou axiale qui correspond, selon la caractéristique combinée, à une course particulière en relation avec l'effort axial particulier à appliquer.

Plus particulièrement, on effectue l'application d'un effort sur une surface 10 d'un composant et la mesure du déplacement de la surface 10 depuis le même côté de la surface 10, contrairement à l'art antérieur où il est commun d'appliquer une force par le dessus, puis de mesurer un déplacement par le dessous.

Plus particulièrement, on utilise le dispositif 100 pour effectuer le garnissage d'un composant d'horlogerie avec une pierre dont on contrôle l'effort d'insertion et la constance de la position axiale par rapport à ce composant d'horlogerie. Un tel composant d'horlogerie peut être notamment, et non limitativement, une ébauche telle que platine, pont, bâti, ou similaire, ou encore une fourniture, telle que plaque, bascule, renvoi, ou similaire.

Plus particulièrement, à l'inverse, on utilise ce dispositif 100 pour effectuer le déchassage d'une pierre chassée dans un composant d'horlogerie, avec un effort d'extraction contrôlé.

En somme, pour simplifier la mesure de tenue des pierres au garnissage, il est imaginé d'ajouter à l'extrémité du palpeur (mesure de distance), un actionneur simple et intuitif pour générer la force désirée qui est issue d'un ensemble de ressorts spiraux.

Une fois que l'extrémité de la touche du système de mesure distance est en contact avec la pierre :
- on effectue la prise de zéro ;
- on actionne la force souhaitée en tournant la bague extérieure de l'actionneur ou moyen de commande 6 ;
- on vérifie en même temps si la surface 10 de la pierre a bougé pendant l'application de l'effort axial, et de quelle valeur.

En somme, l'invention permet de résoudre les difficultés actuelles par les avantages qu'elle apporte :
- suppression des manipulations multiples d'un composant d'horlogerie pour déterminer la tenue d'une pierre ;
- diminution de l'incertitude de mesure de distance (pierre qui bouge) ;
- diminution de la variabilité de la force appliquée ;
- réduction du temps de mesure ;
- réduction des coûts, plus faibles que ceux des solutions actuelles ;
- simplicité, interchangeabilité ;
- amélioration de la fiabilité de la mesure, étant donné que tout est intégré dans un seul ensemble et que l'application de la force ainsi que la mesure de distance se situent dans le même axe.

L'invention se révèle donc particulièrement efficace pour effectuer un enchâssage de précision ou un garnissage de précision, pour contrôler la qualité de la tenue de cet enchâssage ou de ce garnissage. Le dispositif 100 tel que décrit est peu coûteux, compact, et suffisamment léger pour être transporté selon les besoins de la production.

La manipulation est simplifiée puisque l'application de la force et la mesure sont combinées dans une opération unique.

## Revendications

1. Dispositif (100) d'application d'une force axiale sur un composant d'horlogerie, et de mesure simultanée de distance axiale entre une référence et une surface (10) dudit composant, notamment pour garnissage de pièce d'horlogerie, ledit dispositif (100) comportant un support (1) porteur d'au moins un corps de mesure (2) lequel comporte au moins un moyen de mesure (3) agencé pour effectuer une mesure axiale de position d'une dite surface (10) d'un composant d'horlogerie, selon une direction axiale (A), lequel moyen de mesure (3) comporte un palpeur (4) en contact avec une touche d'appui et de mesure (5) et aligné avec elle selon ladite direction axiale (A), ledit dispositif (100) étant un dispositif combiné pour effectuer simultanément l'application d'une force et la mesure du déplacement de la surface sur laquelle est appliquée cette force, ledit dispositif (100) comportant au moins un moyen de commande (6), qui est agencé pour être manoeuvré par un utilisateur ou par un manipulateur automatisé (7), pour appliquer sur une dite surface (10) un effort axial caractérisé, transmis à ladite touche d'appui et de mesure (5) par au moins un moyen de rappel élastique axial (9) taré.

2. Dispositif (100) selon la revendication 1, **caractérisé en ce que** ledit moyen de commande (6) est agencé pour entraîner une bague d'appui (8) dans un mouvement selon ladite direction axiale (A) et pour modifier l'effort axial exercé par ladite bague d'appui (8) selon ladite direction axiale (A) sur ledit au moins un moyen de rappel élastique axial (9), qui est agencé pour transmettre à ladite touche d'appui et de mesure (5) un effort axial proportionnel à la course axiale de ladite bague d'appui (8).

3. Dispositif (100) selon la revendication 2, **caractérisé en ce que** ledit moyen de commande (6) est agencé pour être entraîné en rotation, et comporte au moins un entraîneur (61) agencé pour suivre une rainure (26) oblique ou sensiblement hélicoïdale ménagée dans ledit corps (2) et pour entraîner ladite bague d'appui (8) au moins en translation selon ladite direction axiale (A).

4. Dispositif (100) selon la revendication 2 ou 3, **caractérisé en ce que** ladite bague d'appui (8) comporte, selon ladite direction axiale (A), un filetage (82) ou respectivement un taraudage coopérant avec un taraudage (22) ou respectivement un filetage que comporte ledit corps (2).

5. Dispositif (100) selon la revendication 2 ou 3, **caractérisé en ce que** ledit moyen de commande (6) comporte un taraudage (68) ou respectivement un filetage coopérant avec un filetage (28) ou respectivement un taraudage que comporte ledit corps (2).

6. Dispositif (100) selon la revendication 2 et l'une des revendications 1 à 5, **caractérisé en ce que** ledit moyen de rappel élastique axial (9) comporte au moins un élément élastique (90) sensiblement plan comportant une serge périphérique (91) portant au moins un bras en spirale (93) portant un anneau central (92).

7. Dispositif (100) selon la revendication 6, **caractérisé en ce que** ledit moyen de rappel élastique axial (9) comporte un empilement de plusieurs dits éléments élastiques (90), chacun taré pour un effort axial nominal particulier, et dont la résultante détermine le tarage axial maximal dudit dispositif (100).

8. Dispositif (100) selon la revendication 7, **caractérisé en ce que** ledit empilement est un empilement alterné de dits éléments élastiques (90) et de bagues intermédiaires (95) agencées pour éviter tout contact entre lesdits bras (93) desdits éléments élastiques (90) voisins.

9. Dispositif (100) selon l'une des revendications 6 à 8, **caractérisé en ce que** ledit dispositif (100) comporte une pluralité de dits éléments élastiques (90), qui sont tous interchangeables, et chacun associé à une courbe caractéristique d'effort en fonction de la course, accessible à l'utilisateur et/ou stockée dans un moyen de pilotage apte à déterminer une composition d'empilement en fonction de l'effort résultant à appliquer, et les courses de rotation ou axiales à appliquer audit moyen de commande (6) pour l'obtention d'un effort axial donné.

10. Dispositif (100) selon la revendication 2 et l'une des revendications 1 à 9, **caractérisé en ce que** ledit moyen de rappel élastique axial (9) comporte au moins un élément élastique (90) déformable axialement entre une première partie rigide en appui de butée sur au moins une surface d'appui de butée (21 ; 251) que comporte ledit corps (2), et une deuxième partie rigide soumise à l'action de poussée exercée par au moins une surface de poussée (81, 89,) que comporte ladite bague d'appui (8).

11. Dispositif (100) selon la revendication 2 et l'une des revendications 1 à 9, **caractérisé en ce que** ledit moyen de rappel élastique axial (9) comporte au moins un élément élastique (90) déformable axialement entre une première partie rigide en appui de butée sur au moins une surface d'appui de butée (21 ; 251) que comporte ledit corps (2), et une deuxième partie rigide solidaire de ladite bague d'appui (8).

12. Dispositif (100) selon l'une des revendications 1 à 11, **caractérisé en ce que** ledit corps (2) est en au moins deux parties assemblées l'une avec l'autre, une partie supérieure (20) agencée pour coopérer avec ledit moyen de commande (6) et renfermant ledit palpeur (4), et une partie inférieure (25) portant ladite touche d'appui et de mesure (5).

13. Dispositif (100) selon l'une des revendications 1 à 12, **caractérisé en ce que** ledit au moins un moyen de commande (6) comporte un crantage et/ou des butées de limitation de course.

14. Dispositif (100) selon l'une des revendications 1 à 13, **caractérisé en ce que** ledit dispositif (100) comporte un étagement en série de dits moyens de commande (6) distincts, chacun correspondant à une plage particulière d'effort appliqué, pour appliquer sur une dite surface (10) un premier effort axial dans une première plage d'efforts, puis au moins une deuxième effort axial inférieur audit premier effort axial dans une deuxième plage d'efforts inférieure à ladite première plage d'efforts.

15. Dispositif (100) selon l'une des revendications 1 à 14, **caractérisé en ce que** ledit dispositif (100) comporte une butée supérieure (29) pour une remise à zéro de la course.

16. Dispositif (100) selon la revendication 15, **caractérisé en ce que** ladite butée supérieure (29) comporte au moins un joint d'étanchéité et de protection.

17. Dispositif (100) selon l'une des revendications 1 à 16, **caractérisé en ce que** ledit support (1) dudit dispositif (100) comporte au moins une table ou une palette (79) de réception d'au moins un dit composant, laquelle table ou palette (79) comporte un capteur de force (101) disposé sous ledit composant pour la mesure digitale de l'effort axial qui lui est appliqué.

18. Dispositif (100) selon l'une des revendications 1 à 17, **caractérisé en ce que** ledit dispositif (100) comporte une pluralité de colonnes (18, 19) pour le guidage d'éléments de support desdits corps, et des moyens de réglage manuels (17) et/ou des moyens de réglage motorisés (170) pour les macro-réglages dudit dispositif (100) lors d'un changement de production, et lesdites colonnes assurant la rigidité dudit dispositif (100) et la constance de l'écart axial entre chaque dit élément de support et une table de réception de composants à manipuler, pendant une campagne d'application de force et de mesure combinée.

19. Dispositif (100) selon l'une des revendications 1 à 18, **caractérisé en ce que** ledit dispositif (100) comporte au moins une palette (79) de réception desdits composants et qui est agencée pour une manutention robotisée.

20. Dispositif (100) selon l'une des revendications 1 à 19, **caractérisé en ce que** ledit dispositif (100) comporte au moins un manipulateur automatisé (7) comportant un galet ou une courroie ou une roue d'entraînement pour commander une course angulaire de rotation d'au moins un dit moyen de commande (6).

21. Procédé d'utilisation d'un dispositif (100) selon l'une des revendications 6 à 8, **caractérisé en ce qu'**on se munit d'une pluralité de dits éléments élastiques (90) tarés, dont on enregistre les caractéristiques d'effort en fonction de la course axiale appliquée, et **en ce qu'**on caractérise un empilage particulier de dits éléments élastiques (90) par sa caractéristique résultante combinée d'effort en fonction de la course axiale appliquée, et **en ce qu'**on se réfère à ladite caractéristique combinée pour imprimer audit moyen de commande (6) la course de rotation ou axiale qui correspond, selon ladite caractéristique combinée, à une course particulière en relation avec l'effort axial particulier à appliquer.

22. Procédé selon la revendication 21, **caractérisé en ce qu'**on effectue l'application d'un effort sur une surface (10) d'un composant et la mesure du déplacement de ladite surface (10) depuis le même côté de ladite surface (10).

23. Procédé selon la revendication 21, **caractérisé en ce qu'**on utilise ledit dispositif pour effectuer le garnissage d'un composant d'horlogerie avec une pierre dont on contrôle l'effort d'insertion et constance de la position axiale par rapport audit composant d'horlogerie.

24. Procédé selon la revendication 21, **caractérisé en ce qu'**on utilise ledit dispositif pour effectuer le déchassage d'une pierre chassée dans un composant d'horlogerie, avec un effort d'extraction contrôlé.

## Patentansprüche

1. Vorrichtung (100) zum Anlegen einer axialen Kraft an eine Uhrenkomponente und zum gleichzeitigen Messen eines axialen Abstands zwischen einer Referenz und einer Oberfläche (10) der Komponente, insbesondere zur Ausstattung eines Uhrmachereistücks, wobei die Vorrichtung (100) eine Stütze (1) als Träger mindestens eines Messkörpers (2) beinhaltet, der mindestens ein Messmittel (3) beinhaltet, das angeordnet ist, um eine axiale Positionsmessung einer Oberfläche (10) einer Uhrenkomponente in einer axialen Richtung (A) durchzuführen, wobei das Messmittel (3) einen Taster (4) in Kontakt mit einem Auflage- und Messbolzen (5) beinhaltet und damit in der axialen Richtung (A) ausgerichtet ist, wobei die Vorrichtung (100) eine kombinierte Vorrichtung ist, um gleichzeitig das Anlegen einer Kraft und das Messen der Verschiebung der Oberfläche, an der diese Kraft angelegt wird, durchzuführen, wobei die Vorrichtung (100) mindestens ein Steuermittel (6) beinhaltet, das angeordnet ist, um von einem Benutzer oder von einem automatisierten Manipulator (7) gehandhabt zu werden, um an eine Oberfläche (10) eine charakterisierte axiale Kraft anzulegen, die durch mindestens ein tariertes, axiales, elastisches Rückstellmittel (9) auf den Auflage- und Messbolzen (5) übertragen wird.

2. Vorrichtung (100) nach Anspruch 1, **dadurch gekennzeichnet, dass** das Steuermittel (6) angeordnet ist, um einen Auflagering (8) in einer Bewegung in der axialen Richtung (A) anzutreiben, und um die axiale Kraft zu modifizieren, die von dem Auflagering (8) in der axialen Richtung (A) auf das mindestens eine axiale elastische Rückstellmittel (9) ausgeübt wird, das angeordnet ist, um eine axiale Kraft, die proportional zum axialen Weg des Auflagerings (8) ist, auf den Auflage- und Messbolzen (5) zu übertragen.

3. Vorrichtung (100) nach Anspruch 2, **dadurch gekennzeichnet, dass** das Steuermittel (6) angeordnet ist, um in Drehung angetrieben zu werden, und mindestens einen Mitnehmer (61) beinhaltet, der angeordnet ist, um einer schrägen oder im Wesentlichen schraubenförmigen Nut (26) zu folgen, die in dem Körper (2) ausgeführt ist, und um den Auflagering (8) mindestens im Vorschub entlang der axialen Richtung (A) anzutreiben.

4. Vorrichtung (100) nach Anspruch 2 oder 3, **dadurch gekennzeichnet, dass** der Auflagering (8) in der axialen Richtung (A) ein Gewinde (82) oder beziehungsweise ein Innengewinde aufweist, das mit einem Innengewinde (22) oder beziehungsweise einem Außengewinde, das der Körper (2) beinhaltet, zusammenwirkt.

5. Vorrichtung (100) nach Anspruch 2 oder 3, **dadurch gekennzeichnet, dass** das Steuermittel (6) ein Innengewinde (68) oder beziehungsweise ein Außengewinde beinhaltet, das mit einem Außengewinde (28) oder beziehungsweise einem Innengewinde, das der Körper (2) beinhaltet, zusammenwirkt.

6. Vorrichtung (100) nach Anspruch 2 und einem der Ansprüche 1 bis 5, **dadurch gekennzeichnet, dass** das axiale elastische Rückstellmittel (9) mindestens ein im Wesentlichen ebenes elastisches Element (90) beinhaltet, das einen peripheren Fusskreis (91) beinhaltet, der mindestens einen Spiralarm (93) trägt, der einen Mittelring (92) trägt.

7. Vorrichtung (100) nach Anspruch 6, **dadurch gekennzeichnet, dass** das axiale elastische Rückstellmittel (9) einen Stapel von mehreren elastischen Elementen (90) umfasst, die jeweils für eine bestimmte nominale axiale Kraft tariert sind, und deren Resultierende die maximale axiale Tarierung der Vorrichtung (100) bestimmt.

8. Vorrichtung (100) nach Anspruch 7, **dadurch gekennzeichnet, dass** der Stapel ein abwechselnder Stapel aus den elastischen Elementen (90) und Zwischenringen (95) ist, die angeordnet sind, um jedweden Kontakt zwischen den Armen (93) der benachbarten elastischen Elemente (90) zu verhindern.

9. Vorrichtung (100) nach einem der Ansprüche 6 bis 8, **dadurch gekennzeichnet, dass** die Vorrichtung (100) eine Vielzahl von elastischen Elementen (90) beinhaltet, die alle austauschbar sind und jeweils einer charakteristischen Kraftkurve in Abhängigkeit vom Weg zugeordnet sind, die für den Benutzer zugänglich ist und/oder in einem Steuermittel gespeichert ist, das imstande ist, eine Stapelzusammensetzung in Abhängigkeit von der resultierenden anzulegenden Kraft und den Dreh- oder Axialwegen zu bestimmen, die zum Erhalten einer gegebenen axialen Kraft an das Steuermittel (6) anzulegen sind.

10. Vorrichtung (100) nach Anspruch 2 und einem der Ansprüche 1 bis 9, **dadurch gekennzeichnet, dass** das axiale elastische Rückstellmittel (9) mindestens ein elastisches Element (90) beinhaltet, das axial zwischen einem ersten starren Teil in Anschlagsauflage auf mindestens einer Anschlagsauflageoberfläche (21; 251), die der Körper (2) beinhaltet, und einem zweiten starren Teil verformbar ist, welcher der Schubwirkung ausgesetzt ist, die von mindestens einer Schuboberfläche (81, 89,) ausgeübt wird, die der Auflagering (8) umfasst.

11. Vorrichtung (100) nach Anspruch 2 und einem der Ansprüche 1 bis 9, **dadurch gekennzeichnet, dass** das axiale elastische Rückstellmittel (9) mindestens ein elastisches Element (90) beinhaltet, das axial zwischen einem ersten starren Teil in Anschlagsauflage auf mindestens einer Anschlagsauflageoberfläche (21; 251), die der Körper (2) beinhaltet, und einem zweiten starren Teil, der mit dem Auflagering (8) fest verbunden ist, verformbar ist.

12. Vorrichtung (100) nach einem der Ansprüche 1 bis 11, **dadurch gekennzeichnet, dass** der Körper (2) aus mindestens zwei miteinander zusammengesetzten Teilen besteht, einem oberen Teil (20), der angeordnet ist, um mit dem Steuermittel (6) zusammenzuwirken und den Taster (4) zu umschließen, und einem unteren Teil (25), der den Auflage- und Messbolzen (5) trägt.

13. Vorrichtung (100) nach einem der Ansprüche 1 bis 12, **dadurch gekennzeichnet, dass** das mindestens eine Steuermittel (6) eine Rastung und/oder Anschläge zur Wegbegrenzung beinhaltet.

14. Vorrichtung (100) nach einem der Ansprüche 1 bis 13, **dadurch gekennzeichnet, dass** die Vorrichtung (100) eine Abstufung in Reihe der verschiedenen Steuermittel (6) beinhaltet, die jeweils einem bestimmten Bereich der angelegten Kraft entsprechen, um an eine Oberfläche (10) eine erste axiale Kraft in einem ersten Kraftbereich, dann mindestens eine zweite axiale Kraft, die geringer als die erste axiale Kraft ist, in einem zweiten Kraftbereich, der niedriger als der erste Kraftbereich ist, anzulegen.

15. Vorrichtung (100) nach einem der Ansprüche 1 bis 14, **dadurch gekennzeichnet, dass** die Vorrichtung (100) einen oberen Anschlag (29) für ein Zurücksetzen des Wegs beinhaltet.

16. Vorrichtung (100) nach Anspruch 15, **dadurch gekennzeichnet, dass** der obere Anschlag (29) mindestens eine Abdichtungs- und Schutzdichtung beinhaltet.

17. Vorrichtung (100) nach einem der Ansprüche 1 bis 16, **dadurch gekennzeichnet, dass** die Stütze (1) der Vorrichtung (100) mindestens einen Tisch oder eine Palette (79) zur Aufnahme mindestens einer der Komponenten beinhaltet, wobei der Tisch oder die Palette (79) einen unter der Komponente angeordneten Kraftsensor (101) zum digitalen Messen der an das Bauteil angelegten axialen Kraft beinhaltet.

18. Vorrichtung (100) nach einem der Ansprüche 1 bis 17, **dadurch gekennzeichnet, dass** die Vorrichtung (100) eine Vielzahl von Säulen (18, 19) zum Führen von Stützelementen der Körper, und manuelle Regulierungsmittel (17) und/oder motorisierte Regulierungsmittel (170) für die Makroregulierungen der Vorrichtung (100) bei einer Produktionsumstellung beinhaltet, und die Säulen für die Steifigkeit der Vorrichtung (100) und die Konstanz des axialen Abstands zwischen jedem Stützelement und einem Tisch zur Aufnahme von handhabenden Komponenten während einer kombinierten Kraftanlege- und Messkampagne sorgen.

19. Vorrichtung (100) nach einem der Ansprüche 1 bis 18, **dadurch gekennzeichnet, dass** die Vorrichtung (100) mindestens eine Palette (79) zur Aufnahme der Komponenten beinhaltet, und die für eine robotergestützte Handhabung angeordnet ist.

20. Vorrichtung (100) nach einem der Ansprüche 1 bis 19, **dadurch gekennzeichnet, dass** die Vorrichtung (100) mindestens einen automatisierten Manipulator (7) beinhaltet, der eine Rolle oder einen Riemen oder einem Antriebsrad zum Steuern eines Drehwinkelwegs von mindestens einem Steuermittel (6) beinhaltet.

21. Verfahren zum Verwenden einer Vorrichtung (100) nach einem der Ansprüche 6 bis 8, **dadurch gekennzeichnet, dass** eine Vielzahl von tarierten elastischen Elementen (90) bereitgelegt wird, deren Krafteigenschaften in Abhängigkeit von dem angewandten axialen Weg gespeichert werden, und dadurch, dass ein bestimmter Stapel der elastischen Elemente (90) durch seine kombinierte resultierende Krafteigenschaft in Abhängigkeit von dem angewandten axialen Weg charakterisiert wird, und dadurch, dass die kombinierte Eigenschaft als Bezugsgröße dient, um dem Steuermittel (6) den Dreh- oder Axialweg aufzuprägen, der gemäß der genannten kombinierten Eigenschaft einem bestimmten Weg in Bezug zur bestimmten anzulegenden axialen Kraft entspricht.

22. Verfahren nach Anspruch 21, **dadurch gekennzeichnet, dass** das Anlegen einer Kraft an einer Oberfläche (10) einer Komponente und das Messen der Verschiebung der Oberfläche (10) von derselben Seite der Oberfläche (10) aus durchgeführt werden.

23. Verfahren nach Anspruch 21, **dadurch gekennzeichnet, dass** die Vorrichtung verwendet wird, um die Ausstattung einer Uhrenkomponente mit einem Stein durchzuführen, dessen Einführungskraft und Konstanz der axialen Position in Bezug auf die Uhrenkomponente kontrolliert wird.

24. Verfahren nach Anspruch 21, **dadurch gekennzeichnet, dass** die Vorrichtung verwendet wird, um das Auspressen eines Steins, der in eine Uhrenkomponente gepresst ist, mit einer kontrollierten Extraktionskraft durchzuführen.

## Claims

1. Device (100) for applying an axial force to a timepiece component, and for simultaneously measuring the axial distance between a reference and a surface (10) of said component, in particular for fitting out a timepiece, said device (100) comprising a support (1) carrying at least one measuring body (2) which comprises at least one measuring means (3) arranged to axially measure the position of a said surface (10) of a timepiece component, in an axial direction (A), which measuring means (3) comprises a feeler-spindle (4) in contact with a bearing and measuring point (5) and aligned therewith in said axial direction (A), said device (100) being a combined device for simultaneously applying a force and measuring the displacement of the surface to which this force is applied, said device (100) comprising at least one control means (6) which is arranged to be operated by a user or by an automated controller (7), in order to apply a characterised axial force to a said surface (10), which force is transmitted to said bearing and measuring point (5) by at least one calibrated, axial resilient return means (9).

2. Device (100) according to claim 1, **characterised in that** said control means (6) is arranged to drive a bearing ring (8) through a motion in said axial direction (A) and to modify the axial force exerted by said bearing ring (8), in said axial direction (A) on said at least one axial resilient return means (9), which is arranged to transmit, to said bearing and measuring point (5), an axial force proportional to the axial stroke of said bearing ring (8).

3. Device (100) according to claim 2, **characterised in that** said control means (6) is arranged to be driven in rotation, and includes at least one driver (61) arranged to follow an oblique or substantially helical groove (26) provided in said body (2) and to drive said bearing ring (8) at least in translation in said axial direction (A).

4. Device (100) according to claim 2 or 3, **characterised in that** said bearing ring (8) includes, in said axial direction (A), a thread (82), or respectively a tapping, cooperating with a tapping (22), or respectively a thread, comprised in said body (2).

5. Device (100) according to claim 2 or 3, **characterised in that** said control means (6) includes a tapping (68) or respectively a thread cooperating with a thread (28) or respectively a tapping comprised in said body (2).

6. Device (100) according to claim 2 and one of claims 1 to 5, **characterised in that** said axial resilient return means (9) includes at least one resilient element (90), which is substantially planar, and includes a peripheral felloe (91) carrying at least one spirally-wound arm (93) carrying a central ring (92).

7. Device (100) according to claim 6, **characterised in that** said axial resilient return means (9) includes a stack of a plurality of said resilient elements (90), each of which is calibrated for a specific nominal axial force, and the resultant whereof determines the maximum axial calibration of said device (100).

8. Device (100) according to claim 7, **characterised in that** said stack is an alternating stack of said resilient elements (90) and of intermediate rings (95) arranged to avoid any contact between said arms (93) of said adjacent resilient elements (90).

9. Device (100) according to one of claims 6 to 8, **characterised in that** said device (100) includes a plurality of said resilient elements (90), all of which are interchangeable, and each of which is associated with a force-stroke characteristic curve, accessible to the user and/or stored in a management means capable of determining a stacking composition as a function of the resulting force to be applied, and the rotational or axial strokes to be applied to said control means (6) for obtaining a given axial force.

10. Device (100) according to claim 2 and one of claims 1 to 9, **characterised in that** said axial resilient return means (9) includes at least one resilient element (90) that can be axially deformed between a first rigid part that bears in abutment against at least one banking surface (21; 251) comprised in said body (2), and a second rigid part subjected to the thrust action exerted by at least one thrust surface (81, 89) comprised in said bearing ring (8).

11. Device (100) according to claim 2 and one of claims 1 to 9, **characterised in that** said axial resilient return means (9) includes at least one resilient element (90) that can be axially deformed between a first rigid part that bears in abutment against at least one banking surface (21; 251) comprised in said body (2), and a second rigid part that is integral with said bearing ring (8).

12. Device (100) according to one of claims 1 to 11, **characterised in that** said body (2) is made of at least two parts assembled to one another, an upper part (20) arranged to cooperate with said control means (6) and enclosing said feeler-spindle (4), and a lower part (25) carrying said bearing and measuring point (5).

13. Device (100) according to one of claims 1 to 12, **characterised in that** said at least one control means (6) includes a notch and/or bankings for limiting the stroke.

14. Device (100) according to one of claims 1 to 13, **characterised in that** said device (100) includes a stacking in series of said separate control means (6), each corresponding to a specific range of applied force, in order to apply, to a said surface (10), a first axial force in a first range of forces, and then at least a second axial force that is lower than said first axial force in a second range of forces that is lower than said first range of forces.

15. Device (100) according to one of claims 1 to 14, **characterised in that** said device (100) includes an upper banking (29) for resetting the stroke.

16. Device (100) according to claim 15, **characterised in that** said upper banking (29) includes at least one protective, sealing joint.

17. Device (100) according to one of claims 1 to 16, **characterised in that** said support (1) of said device (100) includes at least one table or pallet (79) for receiving at least one said component, which table or pallet (79) includes a force sensor (101) disposed beneath said component for digitally measuring the axial force applied thereto.

18. Device (100) according to one of claims 1 to 17, **characterised in that** said device (100) includes a plurality of columns (18, 19) for guiding support elements for said bodies, and manual adjustment means (17) and/or motor-driven adjustment means (170) for making macro-adjustments to said device (100) during a production changeover, and said columns ensuring the rigidity of said device (100) and the constancy of the axial distance between each said support element and a table for receiving the components to be handled, during a combined force-application and measurement run.

19. Device (100) according to one of claims 1 to 18, **characterised in that** said device (100) includes at least one pallet (79) for receiving said components and which is arranged for robotic handling.

20. Device (100) according to one of claims 1 to 19, **characterised in that** said device (100) includes at least one automated controller (7) including a roller, a belt or a drive wheel for controlling an angular rotational stroke of at least one said control means (6).

21. Method for using a device (100) according to one of claims 6 to 8, **characterised in that** a plurality of said calibrated resilient elements (90) are provided, the force characteristics whereof are recorded as a function of the applied axial stroke, and **in that** a particular stack of said resilient elements (90) is **characterised by** the combined resultant force characteristic thereof as a function of the applied axial stroke, and in that said combined characteristic is used to impart to said control means (6) the rotational or axial stroke which corresponds, according to said combined characteristic, to a specific stroke in relation to the specific axial force to be applied.

22. Method according to claim 21, **characterised in that** a force is applied to a surface (10) of a component and the displacement of said surface (10) is measured from the same side of said surface (10).

23. Method according to claim 21, **characterised in that** said device is used to fit out a timepiece component with a jewel, whose insertion force and axial position constancy relative to said timepiece component are controlled.

24. Method according to claim 21, **characterised in that** said device is used to extract a friction jewel pressed into a timepiece component with a controlled extraction force.
